# EUROPÄISCHE PATENTSCHRIFT

(11) **EP 3 093 532 B1**
(45) Veröffentlichungstag und Bekanntmachung des Hinweises auf die Patenterteilung: **13.06.2018**
(21) Anmeldenummer: 16160569.6
(22) Anmeldetag: 16.03.2016
(51) Int. Cl.: F16H 57/04, F16H 61/00, F16H 57/02

(54) **HYDRAULIKSYSTEM EINES KRAFTFAHRZEUGS**
HYDRAULIC SYSTEM OF A MOTOR VEHICLE
SYSTEME HYDRAULIQUE DE VEHICULE AUTOMOBILE

(30) Priorität: 15.04.2015 DE 102015206785
(43) Veröffentlichungstag der Anmeldung: 16.11.2016
(73) Patentinhaber: Volkswagen Aktiengesellschaft, 38440 Wolfsburg (DE)
(72) Erfinder: Warnecke, Raimar, 38179 Schwülper (DE); Knoll, Waldemar, 31311 Dollbergen (DE)

(56) Entgegenhaltungen:
- EP-A1- 1 722 121
- EP-A1- 2 302 264
- WO-A2-2015/043586
- DE-A1-102008 008 454
- DE-T5-112010 000 064
- US-A1- 2001 023 587
- US-A1- 2005 284 685

## Beschreibung

Die Erfindung betrifft ein Hydrauliksystem eines Kraftfahrzeugs mit mindestens einer Hauptölpumpe und mit mindestens einer Zusatzölpumpe, wobei die Hauptölpumpe von einer Verbrennungskraftmaschine und die Zusatzölpumpe von einem Elektromotor antreibbar ist, wobei von der Hauptölpumpe ein Ölkreislauf mit Drucköl, insbesondere ein Hochdruckkreis zumindest teilweise mit Hochdrucköl, speisbar ist, wobei ein Schaltventil vorgesehen ist und wobei in Abhängigkeit von der Schaltstellung des Schaltventils mithilfe der Zusatzölpumpe der Ölkreislauf, insbesondere der Hochdruckkreis, mit Drucköl oder eine Niederdruckleitung mit Drucköl, insbesondere mit Niederdrucköl speisbar ist, wobei mithilfe der Niederdruckleitung einer Kupplung, insbesondere einer Doppelkupplung, Drucköl, insbesondere Niederdrucköl zur Kühlung zuführbar ist und mit dem Ölkreislauf, insbesondere mit dem Hochdruckkreis bzw. Hochdrucköl, Getriebekomponenten des Kraftfahrzeugs ansteuerbar sind, und wobei das Schaltventil über eine Steuerdruckleitung ansteuerbar ist die Steuerdruckleitung zwischen einer Mechatronikeinheit und dem Schaltventil funktionstechnisch angeordnet und/oder ausgebildet ist.

Im Stand der Technik sind unterschiedlich ausgebildete Ölkreisläufe bzw. Hydraulikkreisläufe, insbesondere für Kraftfahrzeuge bekannt. Derartige Ölkreisläufe bzw. Hydraulikkreisläufe weisen zunächst eine Hauptölpumpe und insbesondere eine parallel zu der Hauptölpumpe angeordnete Zusatzölpumpe auf. Die Hauptölpumpe wird von einem Verbrennungsmotor bzw. von einer Verbrennungskraftmaschine und die Zusatzölpumpe insbesondere von einem Elektromotor angetrieben. Die Haupt- wie auch die Zusatzölpumpe fördern über einen Saugfilter entsprechendes Getriebeöl aus einem Getriebeölsumpf. Die Hauptölpumpe versorgt dabei im Wesentlichen eine Mechatronikeinheit, wobei von der Mechatronikeinheit entsprechende Aktuatoren des Getriebes des Kraftfahrzeugs oder auch die Kupplung, insbesondere eine Doppelkupplung, mit Öl bzw. Drucköl versorgt werden. Ferner wird über die Mechatronikeinheit verschiedenen Komponenten des Getriebes auch Kühlöl bzw. Schmieröl zugeführt. Die Zusatzölpumpe kann nun parallel zu der Hauptölpumpe ebenfalls entsprechendes Drucköl zur Mechatronikeinheit fördern. Insbesondere ist ebenfalls entsprechendes Drucköl zur Mechatronikeinheit fördern. Insbesondere ist zwischen der Mechatronikeinheit und der Zusatzölpumpe in einer Verbindungsleitung ein Rückschlagventil vorgesehen. Wenn nun insbesondere die Hauptölpumpe als Konstantpumpe ausgestaltet ist, kann die Zusatzölpumpe und über das wirksam zwischen der Zusatzölpumpe und der Abführleitung der Hauptölpumpe angeordnete Rückschlagventil zusätzliches Drucköl bzw. Kühlöl, das insbesondere unterhalb des Hauptdrucks der Hauptölpumpe liegt, bereitgestellt werden. Hierfür ist in der entsprechenden Leitung ein Schaltventil vorgesehen, das über eine Steuerdruckleitung ansteuerbar ist. Insbesondere wird die Steuerdruckleitung zur Ansteuerung des Schaltventiles über die Mechatronikeinheit gespeist, wobei das Schaltventil, je nach Schaltstellung entsprechendes über die Zusatzölpumpe gefördertes Drucköl entweder zusätzlich für die Abführleitung der Hauptölpumpe bereitstellt oder einer Kupplung zur Kühlung zuführt.

Derartige im Stand der Technik Ölkreisläufe bzw. bekannte Hydraulikkreisläufe, insbesondere die eine Hauptölpumpe und eine Zusatzölpumpe sowie eine Mechatronikeinheit aufweisen, sind daher teilweise nicht nur schaltungstechnisch etwas komplexer ausgebildet, sondern weisen eine weitere Vielzahl von Komponenten wie Schaltventile und/oder Strömungsmittelleitungen auf, so dass die Anordnung und/oder Ausbildung der Komponenten innerhalb des zur Verfügung stehenden Bauraums eines Kraftfahrzeugs problematisch ist.

So wird in der DE 11 2010 000 064 T5 eine Fahrzeugantriebsvorrichtung offenbart, die ebenfalls einen Ölkreislauf bzw. ein Hydrauliksystem aufweist. Das Hydrauliksystem weist eine Hauptölpumpe und eine Zusatzölpumpe auf, wobei entsprechende Verbindungsölkanäle in einem Verbindungsgehäuse bereitgestellt werden, um die gewünschte Strömung im Hydrauliksystem zu realisieren.

Schließlich offenbart die EP 2 302 264 B1, welche alle Merkmale des Oberbegriffs des Anspruchs 1 zeigt, ein Hydrauliksystem für ein Kraftfahrzeug, wobei eine Hauptölpumpe an einer äußeren spezifischen Wandfläche eines Automatikgetriebes angeordnet ist. Die hier vorgesehene Hauptölpumpe weist einen entsprechenden Öleinlass bzw. einen Ölauslass sowie ein Pumpenteil und ein Elektromotorteil auf.

Weiterhin ist aus der WO2015/043586 A1 eine Hydrauliksteuerung bekannt, bei der eine Niederdruckleitung mit einer elektrischen Zusatzpumpe oder mit dem Volumenüberschuss der verbrennungsmotorisch angetriebenen Hauptpumpe versorgt werden kann.

Problematisch im Stand der Technik ist die spezifische Anordnung und/oder Ausbildung der Vielzahl der Komponenten bei einem Hydrauliksystem unter dem Aspekt des nur begrenzt zur Verfügung stehenden Bauraums bei einem Kraftfahrzeug. Einerseits können bestimmte Komponenten auch nur in bestimmten Bereichen im Bauraum angeordnet werden, andererseits ist die strömungstechnische Verbindung der Komponenten untereinander durch die Anordnung separater Strömungsmittelleitungen und/oder Steuerdruckleitungen für Schaltventile sehr konstruktionsaufwendig bzw. erfordert entsprechend hohen Bauraum.

Der Erfindung liegt daher die Aufgabe zugrunde, das eingangs genannte Hydrauliksystem, von dem die Erfindung ausgeht, nun derart auszugestalten und weiterzubilden, dass ein Hydrauliksystem einerseits mit einer Vielzahl von spezifischen Komponenten realisiert ist, wobei andererseits Bauraum eingespart ist, und wobei das Hydrauliksystem auch montagefreundlich ausgebildet ist.

Die zuvor aufgezeigte Aufgabe ist nun zunächst mit den Merkmalen des Patentanspruches 1 gelöst. Zunächst sind die Hauptölpumpe und das Schaltventil im Bereich der Kupplung nun derart angeordnet und/oder ausgebildet, so dass die Steuerdruckleitung zumindest teilweise in einem Pumpengehäuse der Hauptölpumpe und zumindest teilweise in einem Kupplungsgehäuse der Kupplung ausgebildet ist. Dies hat zunächst den Vorteil, dass durch die Anordnung und Ausbildung der Steuerdruckleitung in dem Pumpengehäuse der Hauptölpumpe sowie durch die Anordnung und Ausbildung in dem Kupplungsgehäuse der Kupplung Bauraum eingespart werden kann, da keine separaten jeweiligen zusätzlichen Strömungsmittelleitungen angeordnet werden müssen, was zusätzlich den Montageaufwand erheblich vereinfacht.

Bei der bevorzugten Ausführungsform ist das Pumpengehäuse der Hauptölpumpe und/oder das Schaltventil direkt mit dem Kupplungsgehäuse verbunden. Insbesondere weist das Pumpengehäuse der Hauptölpumpe sowie das Schaltventil einen der Außenwandung des Kupplungsgehäuses zugewandten Bereich auf, die miteinander im direkten Kontakt stehen bzw. direkt benachbart zueinander angeordnet sind.

Die Steuerdruckleitung weist nun einen ersten Steuerdruckkanal und einen zweiten Steuerdruckkanal auf, wobei der erste Steuerdruckkanal als integraler Bestandteil des Pumpengehäuses und der zweite Steuerdruckkanal als integraler Bestandteil des Kupplungsgehäuses ausgebildet ist. Hierbei ist das Pumpengehäuse, das Kupplungsgehäuse und das Schaltventil so ausgebildet und/oder angeordnet, dass der erste und der zweite Steuerdruckkanal im Wesentlichen ohne separate weitere Verbindungselemente (mit Ausnahme von Dichtmitteln) miteinander strömungsverbunden sind.

Bei der bevorzugten Ausführungsform sind die einzelnen Komponenten des Hydrauliksystems in spezifischer Weise angeordnet und/oder ausgebildet. So wird das Getriebegehäuse des Kraftfahrzeugs teilweise mithilfe des Kupplungsgehäuses zumindest teilweise öldicht verschlossen, wobei das Schaltventil und der wesentliche Bestandteil der Hauptölpumpe innerhalb des Getriebegehäuses angeordnet sind. Auch eine Mechatronikeinheit ist teilweise am Getriebegehäuse, teilweise am Kupplungsgehäuse angeordnet bzw. befestigt, insbesondere dichtet auch die Mechatronikeinheit das Getriebegehäuse teilweise entsprechend ab. Bei der bevorzugten Ausführungsform ist die Mechatronikeinheit über ein Rohrelement mit dem ersten Steuerdruckkanal strömungsverbunden. Aufgrund der kompakten Anordnung der Mechatronikeinheit zur Hauptölpumpe kann das Rohrelement aber als "Röhrchen" ausgebildet werden. Die Mechatronikeinheit kann auch direkt, insbesondere über einen Stutzen, mit dem ersten Steuerdruckkanal strömungsverbunden.

Das Schaltventil ist mit der Niederdruckleitung insbesondere über einen Stutzen strömungsverbunden, wobei auch die Niederdruckleitung einen Niederdruckkanal aufweist und der Niederdruckkanal zumindest teilweise durch einen ersten und einen zweiten nutförmigen Halbschalbereich gebildet ist. Hierbei ist der erste nutförmige Halbschalbereich als integraler Bestandteil des Pumpengehäuses und der zweite nutförmige Halbschalbereich als integraler Bestandteil im Kupplungsgehäuse ausgebildet. Anders ausgedrückt, nach Montage des Pumpengehäuses auf dem Kupplungsgehäuse wird der Niederdruckkanal durch die beiden dann zueinander korrespondierenden ersten und zweiten nutförmigen Halbschalbereiche gebildet bzw. ausgebildet.

Zudem ist das Schaltventil insbesondere über einen Stutzen mit einer Druckleitung, insbesondere einer Hochdruckleitung strömungsverbunden, wobei die Druckleitung bzw. Hochdruckleitung wiederum einen Druckkanal bzw. Hochdruckkanal aufweist. Auch der Druckkanal bzw. Hochdruckkanal ist zumindest teilweise durch einen ersten und zweiten nutförmigen Halbschalbereich gebildet, wobei der erste nutförmige Halbschalbereich als integraler Bestandteil des Pumpengehäuses und der zweite nutförmige Halbschalbereich als integraler Bestandteil im Kupplungsgehäuse ausgebildet ist. Durch die Anordnung des Pumpengehäuses in direkter Nähe bzw.

Anordnung zum Kupplungsgehäuse wird dann der Druckkanal bzw. Hochdruckkanal durch den ersten und zweiten nutförmigen Halbschalbereich entsprechend ausgebildet. Insbesondere aufgrund der Ausbildung des Niederdruck- bzw. Druckkanals (Hochdruckkanals) durch die jeweiligen nutförmigen Halbschalbereiche und die dann komplette Ausbildung des Niederdruckkanals bzw. Druckkanals (Hochdruckkanals) durch die entsprechende korrespondierende Anordnung des Pumpengehäuses zum Kupplungsgehäuse werden die jeweiligen Kanäle, also der Niederdruckkanal und der Druckkanal (Hochdruckkanal) durch die jeweiligen nutförmigen Halbschalbereiche umfänglich geschlossen bzw. ausgebildet. Separate Strömungsmittelleitungen müssen nicht angeordnet werden. Bauraum ist eingespart, der Montageaufwand ist verringert. Insbesondere weist das Pumpengehäuse der Hauptölpumpe mehrere Strömungseinlassöffnungen und mehrere Strömungsauslassöffnungen auf. Diese Strömungseinlass- und -auslassöffnungen sind über Rohrelemente und/oder stutzenartig ausgebildete Fortsätze mit den Strömungsöffnungen der Mechatronikeinheit oder mit dem Schaltventil strömungsverbunden. Aufgrund der kompakten Anordnung können derartige Rohrelemente insbesondere als "Röhrchen" ausgebildet sein. Bauraum kann entsprechend eingespart werden.

Insbesondere ist bei der bevorzugten Ausführungsform die Mechatronikeinheit direkt neben Pumpengehäuse angeordnet, wobei das Pumpengehäuse mit mindestens einer Seite direkt mit dem Kupplungsgehäuse verbunden ist. Das Schaltventil ist einerseits mit dem Kupplungsgehäuse und andererseits mit dem Pumpengehäuse verbunden, insbesondere ist auch die Zusatzölpumpe am Kupplungsgehäuse direkt angeordnet, so dass eine kompakte Bauform erzielt ist. Im Ergebnis sind die eingangs genannten Nachteile vermieden und entsprechende Vorteile erzielt. Es gibt nun eine Vielzahl von Möglichkeiten, das erfindungsgemäße Hydrauliksystem in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- Fig. 1: in schematischer Darstellung einen Ölkreislauf/Hydraulikkreislauf eines Kraftfahrzeuges mit schematischer Darstellung der unterschiedlichen Komponenten zur Realisierung der jeweiligen Strömungsmittelströme, insbesondere der Kühlöl-Schmiermittelströme sowie insbesondere der zum Schaltventil führenden Steuerdruckleitung,
- Fig. 2: in vereinfachter schematischer Darstellung, teilweise geschnitten, die Anordnung des Pumpengehäuses, des Schaltventils und der Zusatzölpumpe sowie der Mechatronikeinheit im Bereich eines Kupplungsgehäuses und eines Getriebegehäuses, insbesondere zur Verdeutlichung der Ausbildung der von der Mechatronikeinheit zum Schaltventil führenden Steuerdruckleitung,
- Fig. 3: in schematischer, teils perspektivischer Darstellung nochmals die Ausbildung/Anordnung der von der Mechatronikeinheit zum Schaltventil führenden Steuerdruckleitung,
- Fig. 4: in schematischer Darstellung wesentliche Komponenten zur Darstellung der vom Schaltventil zum Kupplungsgehäuse führenden Niederdruckleitung, wobei
- Fig. 5: in schematischer Darstellung die im Pumpengehäuse ausgebildeten nutförmigen bzw. halbschalförmigen Niederdruck- bzw. Druckkanäle (Hochdruckkanäle), und
- Fig. 6: die im Kupplungsgehäuse nutförmig bzw. halbschalförmig ausgebildeten Niederdruck- bzw. Druckkanäle (Hochdruckkanäle) in schematischer Darstellung zeigt,
- Fig. 7: die Ausbildung des vom Schaltventil zur Mechatronikeinheit führenden Druckkanals (Hochdruckkanals) in schematischer Darstellung zeigt, und
- Fig. 8: nochmals in schematischer Darstellung die kompakte Anordnung der Hauptölpumpe und des Schaltventils relativ zum Kupplungsgehäuse in schematischer Darstellung zeigt.

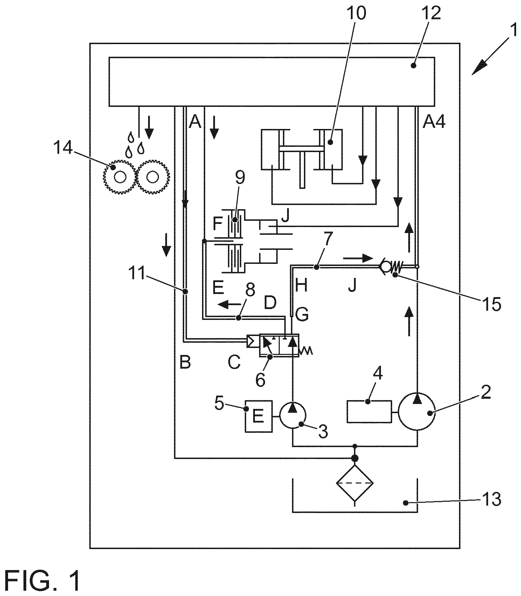

In Fig. 1 ist in schematischer Darstellung ein Hydrauliksystem 1 eines hier nicht im Einzelnen dargestellten Kraftfahrzeuges dargestellt.

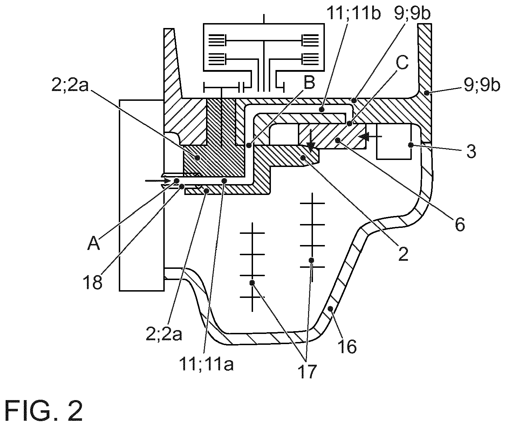

Die Fig. 1 zeigt die wesentlichen Komponenten des Hydrauliksystems 1 im Wesentlichen in der Gesamtdarstellung, wobei die Fig. 2 bis 8 zumindest teilweise einzelne Komponenten in Einzeldarstellung, in Kombination und/oder in vergrößerter Darstellung zeigen.

Das Hydrauliksystem 1 weist mindestens eine Hauptölpumpe 2 und eine Zusatzölpumpe 3 auf. Die Hauptölpumpe 2 ist von einer Verbrennungskraftmaschine 4 antreibbar, wobei die Zusatzölpumpe 3 von einem Elektromotor 5 antreibbar ist. Mithilfe der Hauptölpumpe 2 ist ein Ölkreislauf, insbesondere Hochdruckkreis zumindest teilweise mit Drucköl, insbesondere mit Hochdrucköl speisbar. Zusätzlich ist ein Schaltventil 6 vorgesehen. In Abhängigkeit von der jeweiligen Schaltstellung des Schaltventiles 6 ist mithilfe der Zusatzölpumpe 3 der Ölkreislauf, insbesondere der Hochdruckkreis mit Drucköl, insbesondere über eine Druckleitung 7, insbesondere Hochdruckleitung oder eine Niederdruckleitung 8 mit Drucköl, insbesondere mit Niederdrucköl speisbar. Mithilfe der Niederdruckleitung 8 ist einer Kupplung 9, insbesondere einer Doppelkupplung 9a Drucköl, insbesondere Niederdrucköl zur Kühlung zuführbar.

Mithilfe des Ölkreislaufes, insbesondere des Hochdruckkreises bzw. des Hochdrucköls, sind insbesondere andere Getriebekomponenten des Kraftfahrzeuges wie bspw. Aktuatoren 10, Gangsteller oder dgl. ansteuerbar. Das Schaltventil 6 ist über eine Steuerdruckleitung 11 ansteuerbar, wobei die Steuerdruckleitung 11 zwischen einer Mechatronikeinheit 12 und dem Schaltventil 6 funktionstechnisch angeordnet und/oder ausgebildet ist.

Gut zu erkennen in Fig. 1 sind entsprechende nicht näher bezeichnete Strömungsmittelleitungen, insbesondere Öldruckleitungen, die zur Mechatronikeinheit 12 führen bzw. von der Mechatronikeinheit 12 wegführen, um den Strömungsmittelfluss des Hydrauliksystems 1 bzw. des Ölkreislaufes zu realisieren. Weitere Komponenten wie ein Ölsumpf 13 oder die Schmierung von Zahnrädern 14 über eine nicht näher bezeichnete Strömungsmittelleitung sind in Fig. 1 ebenfalls erkennbar dargestellt. Zum Strömungsmittelfluss/Ölfluss im hier in Fig. 1 dargestellten Hydrauliksystem 1 darf kurz folgendes ausgeführt werden:

Die Verbrennungskraftmaschine 4 treibt die Hauptölpumpe 2 an, über die ein Ölkreislauf bzw. ein Druckkreis, insbesondere einen Hochdruckkreis mit Drucköl, insbesondere mit Hochdrucköl versorgbar ist. Das Drucköl wird insbesondere der Mechatronikeinheit 12 am Punkt A4 zugeführt. Über nicht näher bezeichnete Abgabeöffnungen versorgt bzw. steuert die Mechatronikeinheit 12 verschiedene Komponenten des Getriebes an, bspw. steuert entsprechende Aktuatoren 10 an, um bspw. Gangstufen ein- und auszulegen oder auch die Schmierung von Zahnrädern 14 des Kraftfahrzeuggetriebes wird realisiert, wie in Fig. 1 ersichtlich.

Parallel zur Hauptölpumpe 2 ist eine Zusatzölpumpe 3 angeordnet, die insbesondere über einen Elektromotor 5 angetrieben wird. Den beiden Pumpen, also der Hauptölpumpe 2 sowie der Zusatzölpumpe 3 wird das Öl aus dem Ölsumpf 13 bzw. aus dem entsprechenden Ölkreislauf bzw. Druckkreislauf von der Mechatronikeinheit 12 zugeführt. Zwischen der Zusatzölpumpe 3 und dem Ölkreislauf bzw. Druckkreislauf, der von der Hauptölpumpe 2 gespeist wird, ist ein Schaltventil 6 angeordnet, das mit dem Ölkreislauf bzw. Druckkreislauf der Hauptölpumpe 2 über eine Druckleitung 7, insbesondere eine Hochdruckleitung verbunden ist. In letzterer ist ein Rückschlagventil 15 angeordnet.
Die hier in Fig. 1 erkennbaren Punkte G, H und J sind bestimmte Bereiche/Übergabepunkte in der Druckleitung 7, auf die im Folgenden noch näher eingegangen werden soll. Je nach Schaltstellung des Schaltventiles 6 kann das von der Zusatzölpumpe 3 geförderte Drucköl dann über die Punkte (Übergabepunkte) G, H und J zum Punkt A4 gefördert werden, oder in der anderen Schaltstellung des Schaltventils 6 wird das von der Zusatzölpumpe 3 geförderte Drucköl über eine Niederdruckleitung 8 zu einer Kupplung 9, insbesondere zu einer Doppelkupplung 9a gefördert, insbesondere dient dies dann zur Kühlung der Kupplung 9.

Die Kupplung 9 kann zusätzlich durch eine entsprechende nicht näher bezeichnete Strömungsmittelleitung von der Mechatronikeinheit 12 angesteuert werden. Insbesondere für den Fall, dass in dem von der Hauptölpumpe 2 gespeisten Ölkreislauf bzw. Druckkreis ein zu geringer Ölvolumenstrom existiert, wird das Schaltventil 6 so angesteuert, dass zusätzliches Drucköl von der Zusatzölpumpe 3 über die Druckleitung 7 in diesen Ölkreislauf bzw. Druckkreis zusätzlich gefördert werden kann. Insbesondere wenn der Ölvolumenstrom in dem der Hauptölpumpe 2 zugeordneten Ölkreislauf bzw. Druckkreis ausreichend ist, befindet sich das Schaltventil 6 in der Schaltstellung, so dass dann die Kupplung 9 bzw. die Doppelkupplung 9a mit Kühlöl versorgt werden kann. Gut erkennbar an der Niederdruckleitung 8 sind die Punkte (Übergabepunkte) D, E und F.

Das Schaltventil 6 wird von der Mechatronikeinheit 12 entsprechend angesteuert, insbesondere über eine Steuerdruckleitung 11. Gut zu erkennen sind die Punkte (Übergabepunkte) A, B und C im Bereich der von der Mechatronikeinheit 12 zum Schaltventil 6 führenden Steuerdruckleitung 11.

Die eingangs genannten Nachteile sind nun zunächst dadurch vermieden, dass die Hauptölpumpe 2 und das Schaltventil 6 im Bereich der Kupplung 9 derart angeordnet und/oder ausgebildet sind, so dass die Steuerdruckleitung 11 zumindest teilweise in einem Pumpengehäuse 2a der Hauptölpumpe 2 und zumindest teilweise in einem Kupplungsgehäuse 9b der Kupplung 9 ausgebildet ist. Durch die Realisierung dieser Merkmale kann ein sehr kompakt gebautes Hydrauliksystem 1 für ein Kraftfahrzeug realisiert werden. Bauraum wird eingespart, insbesondere sind zusätzliche Verbindungselemente, insbesondere zusätzliche separate Strömungsmittelleitungen und deren Montage nicht mehr notwendig, so dass der Montageaufwand verringert ist.

Fig. 2 zeigt in schematischer Darstellung, teilweise geschnitten von der Seite die Anordnung und/oder Ausbildung bestimmter Komponenten des Hydrauliksystems 1. Gut zu erkennen ist zunächst die Kupplung 9 und das Kupplungsgehäuse 9b, insbesondere hier der Doppelkupplung 9a. An das Kupplungsgehäuse 9b schließt sich ein Getriebegehäuse 16 einerseits an, das andererseits über die Mechatronikeinheit 12 wiederum mit dem Kupplungsgehäuse 9b verbunden ist. Weiterhin gut zu erkennen ist die Hauptölpumpe 2 mit dem Pumpengehäuse 2a, die Zusatzölpumpe 3 sowie das Schaltventil 6. Das Pumpengehäuse 2a der Hauptölpumpe 2 und auch das Schaltventil 6 sind hier, wie dies aus Fig. 2 ersichtlich ist, zumindest teilweise direkt mit dem Kupplungsgehäuse 9b verbunden. Die Steuerdruckleitung 11 erstreckt sich von der Mechatronikeinheit 12 bis zum Schaltventil 6, insbesondere über die entsprechenden Punkte A, B und C. Die Steuerdruckleitung 11 weist im Wesentlichen einen ersten Steuerdruckkanal 11a und einen zweiten Steuerdruckkanal 11b auf. Der erste Steuerdruckkanal 11a ist als integraler Bestandteil des Pumpengehäuses 2a und der zweite Steuerdruckkanal 11b als integraler Bestandteil des Kupplungsgehäuses 9b ausgebildet.

Aus Fig. 2 ist ebenfalls die bevorzugte Anordnung der einzelnen Komponenten ersichtlich. Das Getriebegehäuse 16 des nicht näher dargestellten Kraftfahrzeugs ist mithilfe des Kupplungsgehäuses 9b zumindest teilweise öldicht verschlossen, entsprechende Getriebewellen 17 sind im Getriebegehäuse 16 nur angedeutet. Das Schaltventil 6 und ein wesentlicher Bestandteil der Hauptölpumpe 2 ist innerhalb des Getriebegehäuses 16 angeordnet bzw. vom Getriebegehäuse 16 und dem Kupplungsgehäuse 9b jeweils teilweise umschlossen. Die Mechatronikeinheit 12 ist teilweise am Getriebegehäuse 16 und teilweise am Kupplungsgehäuse 9b angeordnet, so wie aus der Fig. 2 ersichtlich.

In der bevorzugten Ausführungsform ist das Pumpengehäuse 2a mit einem dem Kupplungsgehäuse 9b zugewandten Bereich mit dem Kupplungsgehäuse 9b direkt verbunden. Ähnliches gilt für das Schaltventil 6, das mit seinem dem Kupplungsgehäuse 9b zugewandten Bereich direkt mit dem Kupplungsgehäuse 9b verbunden ist. Das Schaltventil 6 ist aber mit einem äußeren Bereich zwischen dem Kupplungsgehäuse 9b und dem Pumpengehäuse 2a angeordnet, wobei dieser spezifische äußere Bereich mit den beiden zuvor genannten Komponenten im Wesentlichen auch direkt verbunden ist, was im Folgenden noch näher erläutert werden darf.

Am Übergabepunkt A wird nun Drucköl von der Mechatronikeinheit 12 in die Steuerdruckleitung 11 bzw. in den ersten Steuerdruckkanal 11a geleitet. Am Übergabepunkt A ist die Verbindung zwischen der Mechatronikeinheit 12 und dem Pumpengehäuse 2a über ein Rohrelement 18, das insbesondere als "Röhrchen" ausgebildet ist, realisiert. Über den im Pumpengehäuse 2a als integralen Bestandteil ausgebildeten ersten Steuerdruckkanal 11a gelangt das Drucköl am Übergabepunkt B in das Kupplungsgehäuse 9b, nämlich in den zweiten Steuerdruckkanal 11 b. Über dem im Kupplungsgehäuse 9b integral ausgebildeten zweiten Steuerdruckkanal 11b gelangt das Drucköl zum Schaltventil 6, so wie in Fig. 2 dargestellt, insbesondere am Übergabepunkt C. Im Kupplungsgehäuse 9a ist der zweite Steuerdruckkanal 11b insbesondere als eine Kanalbohrung ausgebildet. Am Übergabepunkt C wird das Drucköl insbesondere mithilfe eines nicht näher bezeichneten Steckrohrelementes an das Schaltventil 6 übergeben.

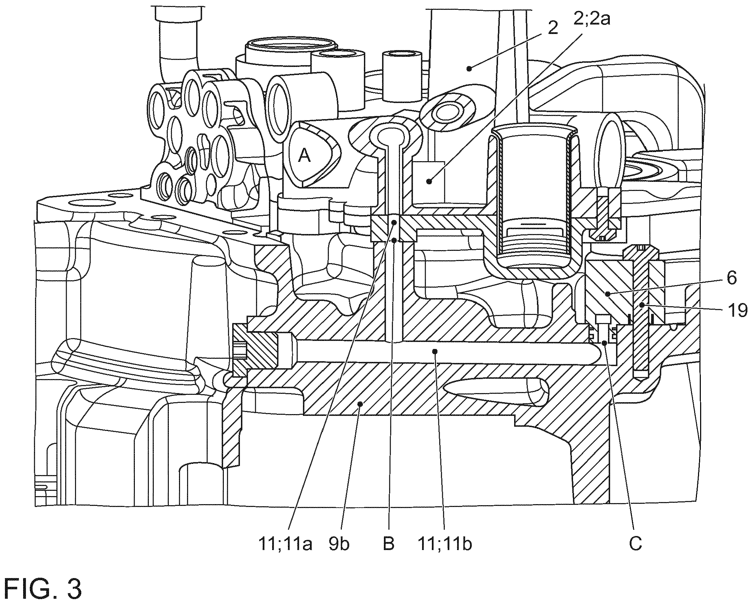

Fig. 3 zeigt nochmals verschiedene einzelne Komponenten, nämlich die Hauptölpumpe 2 mit dem Pumpengehäuse 2a, das Schaltventil 6 sowie das Kupplungsgehäuse 9b, sowie die Realisierung der Steuerdruckleitung 11, insbesondere des zweiten Steuerdruckkanals 11b innerhalb des Kupplungsgehäuses 9b sowie teilweise schematisch angedeutet den ersten Steuerdruckkanal 11a im Pumpengehäuse 2a. Deutlich zu erkennen aus der Fig. 3 sind aber auch die Übergabepunkte A, B und C, sowie das nicht näher bezeichnete Steckrohrelement am Übergabepunkt C. Weiterhin erkennbar in Fig. 3 ist ein sich durch das Schaltventil 6 hindurcherstreckender Zentrierungsbolzen 19, der zur Zentrierung/Anordnung des Schaltelementes 6 dient. Am Übergabepunkt B ist zwischen dem ersten und zweiten Steuerdruckkanal 11a und 11b eine Sickendichtung realisiert. Am Übergabepunkt C ist insbesondere auch ein nicht näher bezeichneter stutzenförmiger Fortsatz zur Übergabe des Drucköls an das Schaltventil 6 realisiert bzw. ausgebildet, insbesondere ist auch ein entsprechender Dichtungsring, insbesondere ein O-Ring zur Abdichtung des jeweiligen Übergabepunktes B und C vorgesehen.

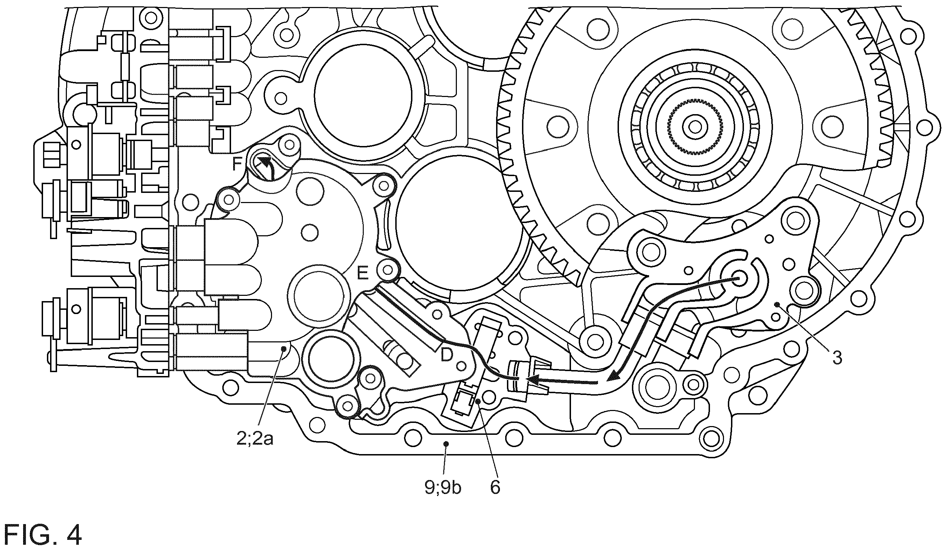

Im Folgenden darf nun zunächst anhand der Fig. 4 bis 6 im Wesentlichen auf die Strömungsmittelverbindung vom Schaltventil 6 zur Kupplung 9, insbesondere also auf die Niederdruckleitung 8 und die Übergabepunkte D, E und F näher eingegangen werden, hierzu darf folgendes ausgeführt werden:
Das Schaltventil ist insbesondere über einen nicht näher bezeichneten Stutzen mit der Niederdruckleitung 8 strömungsverbunden, wobei die Niederdruckleitung 8 einen Niederdruckkanal 8a aufweist bzw. teilweise als Niederdruckkanal 8a ausgebildet ist.

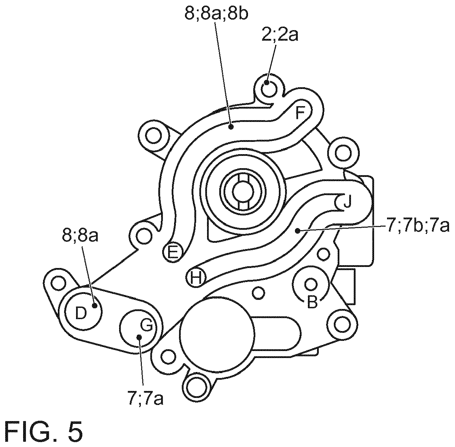

Fig. 4 zeigt die Übergabepunkte D, E und F, die auch in der Fig. 1 korrespondierend dargestellt sind. Gut zu erkennen in den Fig. 4 bis 6 ist, dass der Niederdruckkanal 8a nun zumindest teilweise durch einen ersten und zweiten nutförmigen Halbschalbereich 8b und 8c gebildet ist. Fig. 5 zeigt den ersten nutförmigen Halbschalbereich 8b, der als integraler Bestandteil des Pumpengehäuses 2a ausgebildet ist, insbesondere durch die Übergabepunkte E und F begrenzt wird. Ein Teilbereich des Niederdruckkanals 8a bzw. der Niederdruckleitung 8 verläuft insbesondere als integraler Bestandteil des Pumpengehäuses 2a ausgehend vom Übergabepunkt D zum Übergabepunkt E, wobei der Übergabepunkt D mit dem nicht näher bezeichneten Stutzen des Schaltventiles 6 strömungsverbunden ist. Es erfolgt daher die Ölübergabe vom Schaltventil 6 am Übergabepunkt D über den nicht näher bezeichneten Stutzen des Schaltventils 6, wobei die Komponenten insbesondere mit O-Ringen radial gegenüber dem Pumpengehäuse 2a abgedichtet sind. Vom Übergabepunkt D bis zum Übergabepunkt E ist dieser Teil des Niederdruckkanals 8a als integraler Bestandteil des Pumpengehäuses 2a ausgebildet, wobei vom Übergabepunkt E bis zum Übergabepunkt F der Niederdruckkanal 8a als erste nutförmige Halbschale 8b im Pumpengehäuse 2a ausgebildet ist.

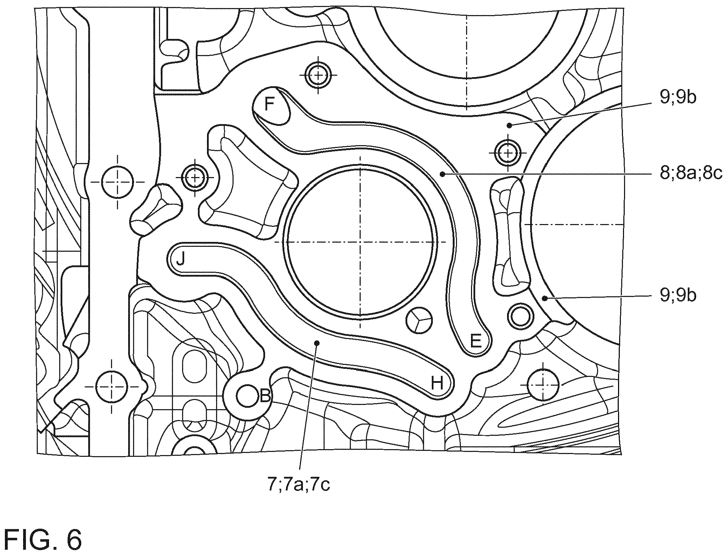

Fig. 6 zeigt nun den "Gegenpart" des ersten nutförmigen Halbschalbereichs 8b, nämlich den zweiten nutförmigen Halbschalbereich 8c, zur Ausbildung dieses entsprechenden Teiles des Niederdruckkanals 8a, wobei der zweite nutförmige Halbschalbereich 8c als integraler Bestandteil des Kupplungsgehäuses 9b ausgebildet ist. Fig. 6 zeigt diesen zweiten nutförmigen Halbschalbereich 8c im Kupplungsgehäuse 9b zwischen den Übergabepunkten E und F. Im montierten Zustand, also bei auf dem Kupplungsgehäuse 9b montiertem Pumpengehäuse 2a ist dann der Niederdruckkanal 8a bzw. die Niederdruckleitung 8 entsprechend umfänglich geschlossen, da die nutförmigen Halbschalen 8b und 8c entsprechend korrespondierend zueinander angeordnet sind. Der erste und zweite nutförmige Halbschalbereich 8b und 8c sind mithilfe von Sickendichtungen gegen die Umgebung abgedichtet. Am Übergabepunkt F erfolgt die Übergabe des Kühlöles an eine Bohrung im Kupplungsgehäuse 9b. Der Übergabepunkt F ist wieder entsprechend insbesondere mithilfe einer Sickendichtung abgedichtet.

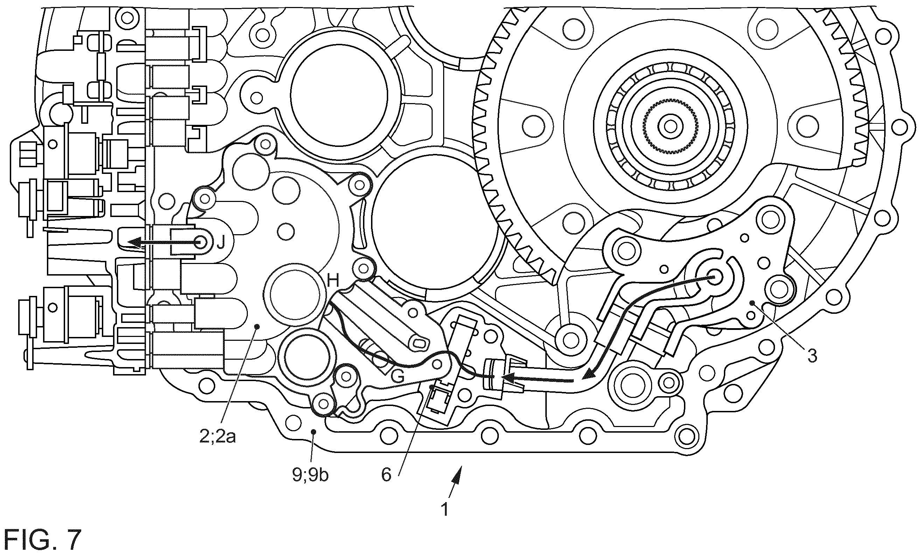

Im Folgenden darf nun anhand der Fig. 7, 5 und 6 die Strömungsverbindung vom Schaltventil 6 zu dem von der Hauptölpumpe 2 gespeisten Ölkreislauf/Druckkreis näher erläutert werden, insbesondere also die Druckleitung 7, insbesondere die Hochdruckleitung bzw. deren Ausbildung und deren Verlauf näher erläutert werden, hierzu nunmehr folgendes:
Fig. 7 zeigt die Anordnung der Komponenten, insbesondere der Hauptölpumpe 2 bzw. des Pumpengehäuses 2a, der Zusatzölpumpe 3, des Hydrauliksystems 1 sowie des Kupplungsgehäuses 9b zur Realisierung der Druckleitung 7. Das Schaltventil 6 ist insbesondere über einen nicht näher dargestellten Stutzen mit der Druckleitung 7, insbesondere mit der Hochdruckleitung strömungsverbunden, wobei die Druckleitung 7 einen Druckkanal 7a, insbesondere einen Hochdruckkanal aufweist. Deutlich in Fig. 7 gezeigt sind die entsprechenden Übergabepunkte G, H und J, die auch in Fig. 1 korrespondierend dargestellt sind.

Wie aus den Fig. 5 und 6 ersichtlich ist, ist der Druckkanal 7a zumindest teilweise durch einen ersten und einen zweiten nutförmigen Halbschalbereich 7b und 7c gebildet. Der erste nutförmige Halbschalbereich 7b ist insbesondere als integraler Bestandteil des Pumpengehäuses 2a ausgebildet, wie aus Fig. 5 ersichtlich, wobei der zweite nutförmige Halbschalbereich 7c insbesondere als integraler Bestandteil im Kupplungsgehäuse 9b ausgebildet, so wie aus der Fig. 6 ersichtlich.

Die Fig. 5 zeigt den Anschlussbereich, nämlich den Übergabepunkt G, der mit dem jeweiligen Stutzen des Schaltventils 6 strömungsverbunden ist, wobei ein erster Teilbereich der Druckleitung bzw. Druckkanals 7a zwischen den Übergabepunkten G und H, als integraler Bestandteil des Pumpengehäuses 2a ausgebildet ist, insbesondere als Bohrung ausgebildet sein kann. Der erste nutförmige Halbschalbereich 7b ist zwischen den Übergabepunkten H und J im Pumpengehäuse 2a ausgebildet, so wie aus Fig. 5 ersichtlich. Der "Gegenpart" des ersten nutförmigen Halbschalbereichs 7b der Druckleitung 7 ist in Fig. 6 dargestellt, nämlich der zweite nutförmige Halbschalbereich 7c, der hier als integraler Bestandteil des Kupplungsgehäuses 9b ausgebildet ist. Gut erkennbar ist hier, dass dieser zweite nutförmige Halbschalbereich 7b zwischen den Übergabepunkten H und J ausgebildet ist. Im montierten Zustand, also bei auf dem Kupplungsgehäuse 9b montiertem Pumpengehäuse 2a und mithilfe von entsprechend vorgesehenen Sickendichtungen ist dann der Druckkanal 7a insbesondere durch die zueinander korrespondierenden ersten und zweiten nutförmigen Halbschale 7b und 7c entsprechend ausgebildet bzw. realisiert.

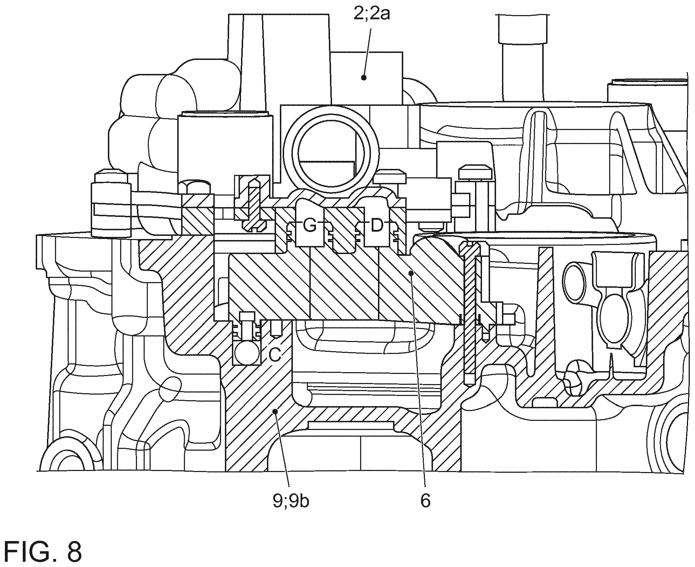

Wie die Fig. 1 bis 7, insbesondere auch die Fig. 8 gut erkennen lassen, weist das Pumpengehäuse 2a der Hauptölpumpe 2 mehrere Strömungseinlassöffnungen und mehrere Strömungsauslassöffnungen auf, die über Rohrelemente, insbesondere "Röhrchen", und/oder stutzenartig ausgebildete Fortsätze mit Strömungsöffnungen der Mechatronikeinheit 12 und/oder mit dem Schaltventil 6 strömungsverbunden sind.

Insbesondere die Fig. 8 zeigt nochmal die kompakte Anordnung des Pumpengehäuses 2a des Schaltventiles 6, teilweise angeordnet zwischen dem Pumpengehäuse 2a und Kupplungsgehäuse 9b.

In Fig. 8 ersichtlich sind insbesondere nochmals die jeweiligen Übergabepunkte C, G und D dargestellt. In der kompakten bevorzugten Ausführungsform ist die Mechatronikeinheit 12 im Wesentlichen direkt neben dem Pumpengehäuse 2a angeordnet, das Pumpengehäuse 2a mit mindestens einer Seite direkt mit dem Kupplungsgehäuse 9b verbunden, wobei das Schaltventil 6 einerseits direkt mit dem Kupplungsgehäuse 9b und andererseits direkt mit dem Pumpengehäuse 2a verbunden ist. Schließlich ist insbesondere auch die Zusatzölpumpe 3 direkt am Kupplungsgehäuse 9b angeordnet.

Mit der so kompakten Bauform und den entsprechend ausgebildeten Strömungsmittelleitungen sind die eingangs genannten Nachteile vermieden und entsprechende Vorteile erzielt.

### Bezugszeichenliste

- 1: Hydrauliksystem
- 2: Hauptölpumpe
- 2a: Pumpengehäuse
- 3: Zusatzölpumpe
- 4: Verbrennungskraftmaschine
- 5: Elektromotor
- 6: Schaltventil
- 7: Druckleitung
- 7a: Druckkanal
- 7b: erster nutförmiger Halbschalbereich
- 7c: zweiter nutförmiger Halbschalbereich
- 8: Niederdruckleitung
- 8a: Niederdruckkanal
- 8b: erster nutförmiger Halbschalbereich
- 8c: zweiter nutförmiger Halbschalbereich
- 9: Kupplung
- 9a: Doppelkupplung
- 9b: Kupplungsgehäuse
- 10: Aktuator
- 11: Steuerdruckleitung
- 11a: erster Steuerdruckkanal
- 11b: zweiter Steuerdruckkanal
- 12: Mechatronikeinheit
- 13: Ölsumpf
- 14: Zahnräder
- 15: Rückschlagventil
- 16: Getriebegehäuse
- 17: Getriebewellen
- 18: Rohrelement
- 19: Zentrierungsbolzen
- A, B, C: Übergabepunkte
- D, E, F: Übergabepunkte
- G, H, J: Übergabepunkte

## Patentansprüche

1. Hydrauliksystem (1) eines Kraftfahrzeuges mit mindestens einer Hauptölpumpe (2) und mit mindestens einer Zusatzölpumpe (3), wobei die Hauptölpumpe (2) von einer Verbrennungskraftmaschine (4) und die Zusatzölpumpe (3) von einem Elektromotor (5) antreibbar ist, wobei von der Hauptölpumpe (2) ein Ölkreislauf mit Drucköl, insbesondere ein Hochdruckkreis zumindest teilweise mit Hochdrucköl speisbar ist, und mit dem Ölkreislauf, insbesondere mit dem Hochdruckkreis bzw. Hochdrucköl, Getriebekomponenten des Kraftfahrzeuges ansteuerbar sind, **dadurch gekennzeichnet, dass** ein Schaltventil (6) vorgesehen ist und wobei in Abhängigkeit von der Schaltstellung des Schaltventiles (6) mithilfe der Zusatzölpumpe (3) der Ölkreislauf, insbesondere der Hochdruckkreis, mit Drucköl oder eine Niederdruckleitung (8) mit Drucköl, insbesondere mit Niederdrucköl speisbar ist, wobei mithilfe der Niederdruckleitung (8) einer Kupplung (9), insbesondere einer Doppelkupplung (9a) Drucköl, insbesondere Niederdrucköl zur Kühlung zuführbar ist, wobei das Schaltventil (6) über eine Steuerdruckleitung (11) ansteuerbar ist und die Steuerdruckleitung (11) zwischen einer Mechatronikeinheit (12) und dem Schaltventil (6) funktionstechnisch angeordnet und/oder ausgebildet ist, und wobei die Hauptölpumpe (2) und das Schaltventil (6) im Bereich der Kupplung (9) derart angeordnet und/oder ausgebildet sind, so dass die Steuerdruckleitung (11) zumindest teilweise in einem Pumpengehäuse (2a) der Hauptölpumpe (2) und zumindest teilweise in einem Kupplungsgehäuse (9b) der Kupplung (9) ausgebildet ist.

2. Hydrauliksystem nach Anspruch 1, **dadurch gekennzeichnet, dass** das Pumpengehäuse (2a) der Hauptölpumpe (2) und/oder das Schaltventil (6) direkt mit dem Kupplungsgehäuse (9b) verbunden sind.

3. Hydrauliksystem nach Anspruch 1 oder 2, **dadurch gekennzeichnet, dass** die Steuerdruckleitung (11) einen ersten Steuerdruckkanal (11a) und einen zweiten Steuerdruckkanal (11b) aufweist, wobei der erste Steuerdruckkanal (11a) als integraler Bestandteil des Pumpengehäuses (2a) und der zweite Steuerdruckkanal (11b) als integraler Bestandteil des Kupplungsgehäuses (9b) ausgebildet ist.

4. Hydrauliksystem nach dem Anspruch 3, **dadurch gekennzeichnet, dass** ein Getriebegehäuse (16) des Kraftfahrzeuges mit Hilfe des Kupplungsgehäuses (9b) zumindest teilweise öldicht verschlossen ist und dass das Schaltventil (6) und ein wesentlicher Bestandteil der Hauptölpumpe (2) innerhalb des Getriebegehäuses (16) angeordnet ist, insbesondere die Mechatronikeinheit (12) teilweise am Getriebegehäuse (16), teilweise am Kupplungsgehäuse (9b) angeordnet ist, und die Mechatronikeinheit (12) über ein Rohrelement (18) mit dem ersten Steuerdruckkanal (11a) strömungsverbunden ist.

5. Hydrauliksystem nach einem der vorstehenden Ansprüche, **dadurch gekennzeichnet, dass** das Schaltventil (6), insbesondere über einen Stutzen mit der Niederdruckleitung (8) strömungsverbunden ist, wobei die Niederdruckleitung (8) einen Niederdruckkanal (8a) aufweist.

6. Hydrauliksystem nach einem der vorstehenden Ansprüche, **dadurch gekennzeichnet, dass** der Niederdruckkanal (8a) zumindest teilweise durch einen ersten und einen zweiten nutförmigen Halbschalbereich (7b, 7c) gebildet ist, wobei der erste nutförmige Halbschalbereich (7b) als integraler Bestandteil des Pumpengehäuses (2a) und der zweite nutförmige Halbschalbereich (7c) als integraler Bestandteil im Kupplungsgehäuse (9b) ausgebildet ist bzw. sind.

7. Hydrauliksystem nach einem der vorstehenden Ansprüche, **dadurch gekennzeichnet, dass** das Schaltventil (6) insbesondere über einen Stutzen mit einer Druckleitung (7) strömungsverbunden ist, wobei die Druckleitung (7) einen Druckkanal (7a) aufweist.

8. Hydrauliksystem nach dem Anspruch 7, **dadurch gekennzeichnet, dass** der Druckkanal (7a) zumindest teilweise durch einen ersten und einen zweiten nutförmigen Halbschalbereich (7b, 7c) gebildet ist, wobei der erste nutförmige Halbschalbereich (7b) als integraler Bestandteil des Pumpengehäuses (2a) und der zweite nutförmige Halbschalbereich (7c) als integraler Bestandteil im Kupplungsgehäuse (9b) ausgebildet ist bzw. sind.

9. Hydrauliksystem nach einem der vorstehenden Ansprüche, **dadurch gekennzeichnet, dass** das Pumpengehäuse (2a) der Hauptölpumpe (2) mehrere Strömungseinlassöffnungen und Strömungsauslassöffnungen aufweist, die über Rohrelemente (18) und/oder stutzenartig ausgebildete Fortsätze mit Strömungsöffnungen der Mechatronikeinheit (12) oder mit dem Schaltventil (6) strömungsverbunden sind.

10. Hydrauliksystem nach einem der vorstehenden Ansprüche, **dadurch gekennzeichnet, dass** die Mechatronikeinheit (12) direkt neben dem Pumpengehäuse (2a) angeordnet ist, dass das Pumpengehäuse (2a) mit mindestens einer Seite direkt mit dem Kupplungsgehäuse (9b) verbunden ist, dass das Schaltventil (6) einerseits direkt mit dem Kupplungsgehäuse (9b) und andererseits direkt mit dem Pumpengehäuse (2a) verbunden ist, wobei insbesondere die Zusatzölpumpe (3) auch am Kupplungsgehäuse (9b) direkt angeordnet ist.

## Claims

1. Hydraulic system (1) of a motor vehicle, having at least one main oil pump (2) and having at least one auxiliary oil pump (3), wherein the main oil pump (2) can be driven by an internal combustion engine (4) and the auxiliary oil pump (3) can be driven by an electric motor (5), wherein an oil circuit can be fed with pressurized oil, in particular a high-pressure circuit can be at least intermittently fed with high-pressure oil, by the main oil pump (2), and transmission components of the motor vehicle can be actuated by means of the oil circuit, in particular by means of the high-pressure circuit or high-pressure oil, **characterized in that** a switching valve (6) is provided, and wherein, by means of the auxiliary oil pump (3), in a manner dependent on the switching position of the switching valve (6), the oil circuit, in particular the high-pressure circuit, can be fed with pressurized oil or a low-pressure line (8) can be fed with pressurized oil, in particular with low-pressure oil, wherein a clutch (9), in particular a double clutch (9a), can be supplied with pressurized oil, in particular low-pressure oil, via the low-pressure line (8) for cooling purposes, wherein the switching valve (6) is actuatable via a control pressure line (11), and the control pressure line (11) is arranged and/or formed functionally between a mechatronic unit (12) and the switching valve (6), and wherein the main oil pump (2) and the switching valve (6) are arranged and/or formed in the region of the clutch (9) such that the control pressure line (11) is formed at least partially in a pump housing (2a) of the main oil pump (2) and at least partially in a clutch housing (9b) of the clutch (9).

2. Hydraulic system according to Claim 1, **characterized in that** the pump housing (2a) of the main oil pump (2) and/or the switching valve (6) are connected directly to the clutch housing (9b).

3. Hydraulic system according to Claim 1 or 2, **characterized in that** the control pressure line (11) has a first control pressure duct (11a) and a second control pressure duct (11b), wherein the first control pressure duct (11a) is formed as an integral constituent part of the pump housing (2a) and the second control pressure duct (11b) is formed as an integral constituent part of the clutch housing (9b).

4. Hydraulic system according to Claim 3, **characterized in that** a transmission housing (16) of the motor vehicle is at least partially closed off in oil-tight fashion by means of the clutch housing (9b), and **in that** the switching valve (6) and a major part of the main oil pump (2) are arranged within the transmission housing (16), in particular the mechatronic unit (12) is arranged partially on the transmission housing (16) and partially on the clutch housing (9b), and the mechatronic unit (12) is connected in terms of flow to the first control pressure duct (11a) by means of a pipe element (18).

5. Hydraulic system according to one of the preceding claims, **characterized in that** the switching valve (6) is connected in terms of flow, in particular via a connector, to the low-pressure line (8), wherein the low-pressure line (8) has a low-pressure duct (8a).

6. Hydraulic system according to one of the preceding claims, **characterized in that** the low-pressure duct (8a) is formed at least partially by a first and a second groove-like half-shell region (7b, 7c), wherein the first groove-like half-shell region (7b) is formed as an integral constituent part of the pump housing (2a) and the second groove-like half-shell region (7c) is formed as an integral constituent part in the clutch housing (9b) .

7. Hydraulic system according to one of the preceding claims, **characterized in that** the switching valve (6) is connected in terms of flow, in particular via a connector, to a pressure line (7), wherein the pressure line (7) has a pressure duct (7a).

8. Hydraulic system according to Claim 7, **characterized in that** the pressure duct (7a) is formed at least partially by a first and a second groove-like half-shell region (7b, 7c), wherein the first groove-like half-shell region (7b) is formed as an integral constituent part of the pump housing (2a) and the second groove-like half-shell region (7c) is formed as an integral constituent part in the clutch housing (9b).

9. Hydraulic system according to one of the preceding claims, **characterized in that** the pump housing (2a) of the main oil pump (2) has multiple flow inlet openings and flow outlet openings which are connected in terms of flow via pipe elements (18), and/or via projections formed in the manner of connectors, to flow openings of the mechatronic unit (12) or to the switching valve (6).

10. Hydraulic system according to one of the preceding claims, **characterized in that** the mechatronic unit (12) is arranged directly adjacent to the pump housing (2a), **in that** the pump housing (2a) is connected with at least one side directly to the clutch housing (9b), and **in that** the switching valve (6) is connected at one side directly to the clutch housing (9b) and at the other side directly to the pump housing (2a), wherein, in particular, the auxiliary oil pump (3) is also arranged directly on the clutch housing (9b).

## Revendications

1. Système hydraulique (1) de véhicule automobile, comprenant au moins une pompe à huile principale (2) et au moins une pompe à huile auxiliaire (3), la pompe à huile principale (2) pouvant être entraînée par un moteur à combustion interne (4) et la pompe à huile auxiliaire (3) pouvant être entraînée par un moteur électrique (5), un circuit d'huile avec de l'huile sous pression, en particulier un circuit à haute pression pouvant être alimenté au moins en partie en huile à haute pression par la pompe à huile principale (2), et des composants de la transmission du véhicule automobile pouvant être commandés avec le circuit d'huile, en particulier avec le circuit haute pression ou l'huile à haute pression, **caractérisé en ce qu'**une soupape de commutation (6) est prévue, et en fonction de la position de commutation de la soupape de commutation (6), à l'aide de la pompe à huile auxiliaire (3), le circuit d'huile, en particulier le circuit à haute pression peut être alimenté avec de l'huile sous pression ou une conduite basse pression (8) peut être alimentée avec de l'huile sous pression, en particulier avec de l'huile à basse pression, à l'aide de la conduite basse pression (8) de l'huile sous pression, en particulier de l'huile à basse pression, pouvant être acheminée pour le refroidissement à un embrayage (9), en particulier un double embrayage (9a), la soupape de commutation (6) pouvant être commandée par le biais d'une conduite de pression de commande (11) et la conduite de pression de commande (11) étant disposée et/ou réalisée techniquement entre une unité mécatronique (12) et la soupape de commutation (6), et la pompe à huile principale (2) et la soupape de commutation (6) étant disposées et/ou réalisées dans la région de l'embrayage (9) de telle sorte que la conduite de pression de commande (11) soit réalisée au moins en partie dans un boîtier de pompe (2a) de la pompe à huile principale (2) et au moins en partie dans un boîtier d'embrayage (9b) de l'embrayage (9) .

2. Système hydraulique selon la revendication 1, **caractérisé en ce que** le boîtier de pompe (2a) de la pompe à huile principale (2) et/ou la soupape de commutation (6) sont connectés directement au boîtier d'embrayage (9b).

3. Système hydraulique selon la revendication 1 ou 2, **caractérisé en ce que** la conduite de pression de commande (11) présente un premier canal de pression de commande (11a) et un deuxième canal de pression de commande (11b), le premier canal de pression de commande (11a) étant réalisé sous forme de constituant intégral du boîtier de pompe (2a) et le deuxième canal de pression de commande (11b) étant réalisé sous forme de constituant intégral du boîtier d'embrayage (9b).

4. Système hydraulique selon la revendication 3, **caractérisé en ce qu'**un boîtier de transmission (16) du véhicule automobile est fermé de manière au moins en partie étanche à l'huile à l'aide du boîtier d'embrayage (9b) et **en ce que** la soupape de commutation (6) et un constituant essentiel de la pompe à huile principale (2) sont disposés à l'intérieur du boîtier de transmission (16), en particulier l'unité mécatronique (12) est disposée en partie au niveau du boîtier de transmission (16), et en partie au niveau du boîtier d'embrayage (9b), et l'unité mécatronique (12) est connectée fluidiquement par le biais d'un élément tubulaire (18) au premier canal de pression de commande (11a).

5. Système hydraulique selon l'une quelconque des revendications précédentes, **caractérisé en ce que** la soupape de commutation (6), en particulier par le biais d'une tubulure, est connectée fluidiquement à la conduite basse pression (8), la conduite basse pression (8) présentant un canal basse pression (8a).

6. Système hydraulique selon l'une quelconque des revendications précédentes, **caractérisé en ce que** le canal basse pression (8a) est formé au moins en partie par une première et une deuxième région en demi-coque en forme de rainure (7b, 7c), la première région en demi-coque en forme de rainure (7b) étant réalisée sous forme de constituant intégral du boîtier de pompe (2a) et la deuxième région en demi-coque en forme de rainure (7c) étant réalisée sous forme de constituant intégral dans le boîtier d'embrayage (9b).

7. Système hydraulique selon l'une quelconque des revendications précédentes, **caractérisé en ce que** la soupape de commutation (6) est connectée fluidiquement notamment par le biais d'une tubulure à une conduite de pression (7), la conduite de pression (7) présentant un canal de pression (7a).

8. Système hydraulique selon la revendication 7, **caractérisé en ce que** le canal de pression (7a) est formé au moins en partie par une première et une deuxième région en demi-coque en forme de rainure (7b, 7c), la première région en demi-coque en forme de rainure (7b) étant réalisée sous forme de constituant intégral du boîtier de pompe (2a) et la deuxième région en demi-coque en forme de rainure (7c) étant réalisée sous forme de constituant intégral dans le boîtier d'embrayage (9b) .

9. Système hydraulique selon l'une quelconque des revendications précédentes, **caractérisé en ce que** le boîtier de pompe (2a) de la pompe à huile principale (2) présente plusieurs ouvertures d'entrée d'écoulement et plusieurs ouvertures de sortie d'écoulement, qui par le biais d'éléments tubulaires (18) et/ou de saillies réalisées en forme de tubulures, sont connectées fluidiquement à des ouvertures d'écoulement de l'unité mécatronique (12) ou à la soupape de commutation (6) .

10. Système hydraulique selon l'une quelconque des revendications précédentes, **caractérisé en ce que** l'unité mécatronique (12) est disposée directement à côté du boîtier de pompe (2a), **en ce que** le boîtier de pompe (2a) est connecté par au moins un côté directement au boîtier d'embrayage (9b), **en ce que** la soupape de commutation (6) d'une part est connectée directement au boîtier d'embrayage (9b) et d'autre part est connectée directement au boîtier de pompe (2a), la pompe à huile auxiliaire (3) étant notamment également disposée directement sur le boîtier d'embrayage (9b).
